# EUROPÄISCHE PATENTSCHRIFT

(11) **EP 3 194 334 B1**
(45) Veröffentlichungstag und Bekanntmachung des Hinweises auf die Patenterteilung: **12.12.2018**
(21) Anmeldenummer: 15770473.5
(22) Anmeldetag: 14.09.2015
(51) Int. Cl.: C01B 32/00, C05D 9/00, A01N 25/12, C05F 11/02, A01N 25/08

(54) **VERFAHREN ZUR HERSTELLUNG EINES MIKROPORÖSEN KOHLENSTOFFHALTIGEN MATERIALS UND SEINE VERWENDUNG**
METHOD FOR PRODUCING A MICROPOROUS CARBONACEOUS MATERIAL AND ITS USE
PROCEDE DE FABRICATION DE MATERIAU MICROPOREUX DE CARBONE ET SON UTILISATION

(30) Priorität: 16.09.2014 DE 102014013415; 17.02.2015 DE 102015102244
(43) Veröffentlichungstag der Anmeldung: 26.07.2017
(73) Patentinhaber: Otto, Stefan, P., 60431 Frankfurt am Main (DE)
(72) Erfinder: STERNINI, Daniela, 60431 Frankfurt am Main (DE); OTTO, Stefan, P., 60431 Frankfurt am Main (DE)
(74) Vertreter: Cohausz & Florack
(86) Internationale Anmeldenummer: PCT/EP2015/070987
(87) Internationale Veröffentlichungsnummer: WO 2016/041911

(56) Entgegenhaltungen:
- WO-A1-2012/092962
- CN-A- 101 195 485
- CN-A- 103 771 409
- CN-A- 103 787 748
- US-A1- 2005 279 696
- AYHAN DEMIRBAS: "Properties of charcoal derived from hazelnut shell and the production of briquettes using pyrolytic oil", ENERGY, Bd. 24, Nr. 2, 1. Februar 1999 (1999-02-01), Seiten 141-150, XP055231036, GB ISSN: 0360-5442, DOI: 10.1016/S0360-5442(98)00077-2

## Beschreibung

Die Erfindung bezieht sich auf ein mikroporöses kohlenstoffhaltiges Material, ein Verfahren zur Herstellung eines solchen mikroporösen kohlenstoffhaltigen Materials, seine Verwendung, sowie auf ein Bodenverbesserungs-, Nahrungsergänzungs- oder Absorptionsmittel, welches das mikroporöse kohlenstoffhaltige Material enthält.

Steinkohle, Braunkohle, Holzkohle und Pflanzenkohle, sogenannte Biochar, sind Rohstoffe, die vor allem als Brennstoffmaterial sowie als Hilfsstoff für die Kompostierung und Nährstofffixierung im Boden eingesetzt werden.

In der DE 37 28 666 A1 wird beispielsweise ein Holzkohlegranulat als besonders feuereffizienter Brennstoffspeicher beschrieben.

In der WO 2011/114221 A1 wird eine kohlehaltige Düngemittelzusammensetzung beschrieben, die als Düngemittel Harnstoff, Monoammoniumphosphat (MAP), Diammoniumphosphat (DAP), Kaliumchlorid und Kaliumsulfat beinhaltet. Die Zubereitung wird in Form von Pellets eingesetzt, die durch Feuchtgranulierung erhalten werden.

Die WO 2012/092962 A1 beschreibt kohlehaltige Träger in Form von Pulvern oder Granulaten, die mit unterschiedlichen Mikroorganismen und Chemikalien beladen sein können.

Die CN 101195 485 A beschreibt ein Verfahren zur Herstellung von Bambus-basierter Aktivkohle. Die Herstellung der Aktivkohle erfolgt durch Pyrolyse des Bambusmaterials, Zerkleinerung des pyrolysierten Bambusmaterials und Aktivierung des zerkleinerten Materials.

Demirbas, "Properties of charcoal derived from hazelnut shell and the production of briquette using pyrolytic oil", ENERGY, Bd. 24, Nr. 2, 1. Februar 1999, S. 141-150 beschreibt ein Verfahren zur Herstellung von Haselnussschalen-basierten Kohlebriketts. Die Haselnussschalen werden pyrolysiert und brikettiert. Die Briketts können dann vom Anwender in kleinere Stücke gebrochen werden, um besser in eine entsprechende Verbrennungsvorrichtung zu passen.

In der US 2012/0137744 A1 wird mikroporöse Aktivkohle beschrieben.

Die Unterschiede zwischen Steinkohle, Braunkohle, Holzkohle und Biochar sind dem Fachmann bekannt. Unter Biochar wird Kohle verstanden, die durch Pyrolyse von Biomasse, das heißt aus rein pflanzlichen Ausgangsstoffen, wie beispielsweise industriellen oder landwirtschaftlichen Abfallprodukten, hergestellt wird. Biochar liegt im Allgemeinen als Mischung mit heterogener Partikelgrößenverteilung vor. Die pyrolytische Verkohlung zu Biochar aus rein pflanzlichen Ausgangsstoffen erfolgt unter Luftausschluss bei Temperaturen über 300°, insbesondere mit Spitzenwerten von über 1000°C. Diese Bedingungen führen vorwiegend zu einer Wasserabspaltung, wodurch Biochar, welche im Wesentlichen aus elementarem Kohlenstoff besteht, Synthesegas und Wärme erhalten werden. Biochar ist im Vergleich zu anderen Kohlearten eine relativ neue Entwicklung und ist von der traditionellen Holzkohle zu unterscheiden. Holzkohle wird durch Verkohlung von lufttrockenem grobstückigem Baumholz (circa 13 bis 18 Gew. % Wasser bezogen auf das Gesamtgewicht des Holzes) bei etwa 275°C hergestellt. Dabei wird ausschließlich Baumholz als Ausgangsstoff verwendet. Im Gegensatz hierzu, wird Biochar bei viel höheren Temperaturen pyrolysiert und aus einer viel größeren Vielfalt an pflanzlichen Ausgangsstoffen in Form von Biomasse erhalten. Holz ist hier nur einer von vielen möglichen Bestandteilen, welche die Ausgangsmischung für die Biocharherstellung ausmachen können. Wird Holz aus Ausgangsstoff für Biochar verwendet, werden Holzchips verwendet, dabei ist die Stückgröße des Holzes wesentlich kleiner als bei der Holzkohlenherstellung.

Durch moderne Pyrolyseverfahren kann fast aus jeglicher Art von pflanzlichem Rohstoff hochwertige Biochar gewonnen werden. Die bei der Pyrolyse entstehenden Synthesegase werden unter anderem durch flammenlose Oxidation schadstoffarm verbrannt. Ein Teil der dabei entstehenden Wärme wird wiederum zur Erhitzung der nachgeförderten Biomasse verwendet. Somit handelt es sich insgesamt um einen energieautarken Prozess. Die Abwärme lässt sich weiterhin über Kraft-Wärme-Kopplung in Elektrizität und Wärme umwandeln und kann entsprechend genutzt werden.

In "Biochar for Environmental Management" (Lehman und Joseph, Earthscan 2009, ISBN-978-1-84407-658-1) wird Biochar unter anderem ein großes Potential als Hilfsstoff für die Kompostierung, Nährstofffixierung und als mögliches Mittel zur Kompensation der Kohlendioxid-Emissionen zugeschrieben. Biochar besitzt eine poröse Struktur und große spezifische Oberfläche, weshalb es eine mehrfache Menge seines Eigengewichts aufzunehmen vermag. Dies macht Biochar für die Verwendung als Trägermaterial, z.B. für Nährstoffe oder Mikroorganismen, interessant.

Biochar selbst ist durch die Pyrolyse inert, besteht fast ausschließlich aus Kohlenstoff und hat dadurch keinen eigenen Düngeeffekt oder Nährwert. Um Biochar beispielsweise als Düngemittel, Bodenverbessungsmittel oder Nahrungsergänzungsmittel verwenden zu können, muss sie zunächst mit den gewünschten Substanzen aufgeladen bzw. biologisch aktiviert werden. Eine Aufladung von Biochar mit Nährstoffen oder Mikroorganismen kann beispielsweise durch Kompostierung der Biochar, Vermengen der Biochar mit Kompostmaterial oder durch Hinzufügen von Zellkulturen zur Biochar erfolgen.

Ein Nachteil von bisherigen Biocharanwendungen ist die ausgeprägte Staubbildung und strukturelle Instabilität, welche die Handhabung, Weiterverarbeitung und Bearbeitung der Biochar erschweren. Außerdem ist der Wirkungsgrad des Aufladens von Biochar mit Substanzen suboptimal und unterliegt großen Schwankungen.

Der vorliegenden Erfindung liegt vor diesem Hintergrund das technische Problem zugrunde ein mikroporöses kohlenstoffhaltiges Material mit verbesserten und reproduzierbareren Eigenschaften bereitzustellen.

Ausgehend von dem voranstehenden Stand der Technik bestand eine Aufgabe der Erfindung insbesondere darin, ein Verfahren bereitzustellen, mit dem es auf einfache und wirtschaftlich effektive Weise möglich ist, ein mikroporöses kohlenstoffhaltiges Material mit hervorragenden Kapillar- und Oberflächeneigenschaften herzustellen, welches sich besonders gut und reproduzierbarer weiterverarbeiten, bearbeiten und handhaben lässt.

Das zuvor aufgezeigte technische Problem wird erfindungsgemäß durch ein Verfahren zur Herstellung eines mikroporösen kohlenstoffhaltigen Materials mit den Merkmalen des Anspruchs 1 und ein dadurch erhältliches mikroporöses kohlenstoffhaltiges Material gemäß Anspruch 21 gelöst. Das oben aufgezeigte technische Problem wird auch durch die in Anspruch 25 angegebene Verwendung und durch ein Bodenverbesserungs-, Nahrungsergänzungs- oder Absorptionsmittel gemäß Anspruch 27 gelöst. Vorteilhafte Ausgestaltungen sind in den abhängigen Unteransprüchen angegeben.

Das erfindungsgemäße Verfahren umfasst folgende Schritte: (a) Bereitstellen eines kohlenstoffhaltigen Materials, welches durch Pyrolyse von lignocellulosehaltigem Material erhältlich ist, (b) Pelletieren des kohlenstoffhaltigen Materials durch Einwirkung von Druck, (c) Granulieren des pelletierten kohlenstoffhaltigen Materials, und (d) Fraktionieren nach Partikelgröße, wobei das Pelletieren des kohlenstoffhaltigen Materials in Schritt b) mittels Zerkleinern und Pressen durch eine Matrize erfolgt.

Ohne vorherige Komprimierung weisen Holz- und Pflanzenkohle eine heterogene Kapillarstruktur auf. Bei der Biochar kann diese beispielsweise gekennzeichnet sein durch das Nebeneinander von Großkapillar- (z.B. Kapillaren mit einem Kapillardurchmesser von etwa > 50 µm) und Mikrokapillarbereichen (z.B. Kapillaren mit Kapillardurchmesser von etwa < 50 µm). Überraschend hat sich gezeigt, dass das Komprimieren des kohlenstoffhaltigen Materials in Schritt b) dazu führt, dass das daraus erhältliche mikroporöse kohlenstoffhaltige Material besonders gute ad- und absorbierende Eigenschaften aufweist und sich gleichzeitig optimal weiterverarbeiten, bearbeiten und handhaben lässt.

Ohne an wissenschaftliche Theorie gebunden sein zu wollen, scheint sich diese überraschende Wirkung dadurch erklären zu lassen, dass die Kapillarstruktur des mikroporösen kohlenstoffhaltigen Materials, die aus einer Mischung von Makro- und Mikrokapillaren besteht, durch das erfindungsgemäße Verfahren in eine ausgeprägte Mikrokapillarstruktur umgewandelt wird. Es scheint, dass durch die Kompression in Schritt b) weite Teile der Großkapillarbereiche in Mikrokapillarbereiche umgewandelt werden.

Praktische Versuche haben gezeigt, dass ein höherer Anteil an Mikrokapillarbereichen im Hinblick auf die nachfolgende Aufladung und Verwendung des mikroporösen kohlenstoffhaltige Material als Bodenverbesserungs-, Nahrungsergänzungs- oder Absorptionsmittel vorteilhaft ist. Ohne an wissenschaftliche Theorie gebunden sein zu wollen, scheint sowohl die Aufladung als auch die spätere Abgabe der Füllstoffe verbessert zu sein. Dies ist überraschend, da man erwartet hätte, dass eine Kompression zu einem Zusammenbruch der Kapillarstruktur und dadurch zu einer Verschlechterung dieser Eigenschaften führen müsste.

Jedenfalls scheint es so zu sein, dass eventuelle, durch die Kompression in Schritt b) bedingte Nachteile durch die nachfolgende Zerkleinerung des Materials in Schritt c) wieder ausgeglichen werden. So scheint es trotz der Kompression in Schritt b) aufgrund der Zerkleinerung des Materials in Schritt c) zu einer Vergrößerung der Oberfläche zu kommen. Erfindungsgemäß stellen sich hierdurch verbesserte Ad- und Absorptionseigenschaften ein. Dieser Effekt scheint bedingt zu sein durch ein synergistisches Zusammenspiel der durch die Kompression in Schritt b) erzielten qualitativen Veränderung der Kapillarstruktur (Vergrößerung des Anteils an Mikrokapillarbereichen, Abbau von Großkapillarbereichen) und der in Schritt c) erzielten quantitativen Vergrößerung der Oberfläche.

Aufgrund der ausgeprägten Mikrokapillarstruktur und vergrößerten Oberfläche weist das erfindungsgemäß erhältliche Material hervorragende ad- und absorbierende Eigenschaften auf, was es für eine Verwendung als Absorptionsmittel besonders geeignet macht.

Zusätzlich haben die Kompression und Zerkleinerung in den Schritten b) und c) den Vorteil, dass die Rieselfähigkeit und damit die Dosiergenauigkeit des Materials erhöht wird. Diese kann nun z.B. einfacher abgewogen und gehandhabt werden als Holzkohle- und Biocharprodukte aus dem Stand der Technik. Außerdem wird auch die Staubbildung vermindert.

Die Mikrokapillarstruktur des erfindungsgemäß erhältlichen mikroporösen kohlenstoffhaltigen Materials erlaubt eine vollständige oder teilweise Befüllung mit Füllsubstanzen wie beispielsweise Mikroorganismen, Düngemitteln, Mineralstoffen, Bioziden und/oder Nahrungsergänzungsmitteln. Derart befüllte Materialien eignen sich hervorragend als Bodenverbesserungsmittel, Bestandteil in Bodenverbesserungsmitteln, Nahrungsergänzungsmittel oder Bestandteil in Nahrungsergänzungsmitteln.

Rückblickend erscheint der Vorteil des durch das erfindungsgemäße Verfahren erhältlichen mikroporösen kohlenstoffhaltigen Materials gegenüber der aus dem Stand der Technik bekannten Kohle, insbesondere Biochar, darin zu liegen, dass sich durch die Ausbildung der ausgeprägten Mikrokapillarstuktur in Schritt b) in Kombination mit der Zerkleinerung in Schritt c) die Oberfläche, bezogen auf das Volumen, nochmals deutlich vergrößert. Dadurch kann eine ausgesprochen große spezifische Oberfläche geschaffen werden, die die guten Ad- und Absorptionseigenschaften des mikroporösen, kohlenstoffhalteigen Materials bedingt. Dies ist überraschend, da man erwarten könnte, dass eine Kompression, wie sie in Schritt b) des erfindungsgemäßen Verfahren vorgenommen wird, sich eher nachteilig auf die Absorptionseigenschaften auswirkt. Das Gegenteil scheint überraschend der Fall zu sein.

Durch seine einzigartigen Oberflächeneigenschaften und seine Mikrostruktur ist das mikroporöse kohlenstoffhaltige Material, das durch das erfindungsgemäße Verfahren erhältlich ist, besonders gut als Träger für verschiedenste Substanzen geeignet. Ein nach dem erfindungsgemäßen Verfahren hergestelltes mikroporöses kohlenstoffhaltiges Material ist somit auch in der Lage, ein Vielfaches dessen aufzunehmen, was herkömmliche Kohle, insbesondere Biochar, aufzunehmen vermag. In einer Ausgestaltung des erfindungsgemäßen Verfahrens wird als kohlenstoffhaltiges Material in Schritt a) Biochar und/oder Holzkohle eingesetzt. Vorzugsweise wird Biochar eingesetzt.

Überraschend wurde festgestellt, dass das erfindungsgemäße Verfahren bzw. das dadurch erhältliche Material die verzögerte Freisetzung einer im mikroporösen kohlenstoffhaltigen Material enthaltenden Substanz erlaubt. Dadurch kann eine geeignete Abgabe der Substanz, insbesondere in Form eines Slow-Release-Effekts, Controlled-Release-Effekts, Sustained-Release-Effekts, Delayed-Release-Effekts und/oder Prolonged-Release-Effekts, erreicht werden. Bei der Verwendung als Bodenverbesserungsmittel oder Bestandteil in Bodenverbesserungsmitteln kann durch den verzögernden Effekt eine Über- oder Unterdeckung des Bodens vermieden werden. Bei der Verwendung als Nahrungsergänzungsmittel oder Bestandteil in Nahrungsergänzungsmitteln kann durch den verzögernden Effekt eine geeignete und gezielte Abgabe der Substanz im Zielorganismus erfolgen. In Bezug auf die vorstehenden Anwendungsgebiete hat es sich in der Praxis als besonders verträglich und ökologisch vorteilhaft erwiesen, wenn das mikroporöse kohlenstoffhaltige Material Biochar enthält oder daraus besteht.

Ein weiterer verfahrenstechnischer Vorteil des erfindungsgemäßen Verfahrens ist, dass es als Trockenverfahren, d. h. im Wesentlichen ohne Zugabe von Flüssigkeit, durchgeführt werden kann. Hierdurch wird ein sonst notwendiges aufwendiges Entfernen von Verklebungen und damit einhergehender Materialverlust vermieden.

Wenn hier von mikroporösem kohlenstoffhaltigem Material die Rede ist, so ist damit ein durch die Schritte a), b) und c) erhältliches Material gemeint. Das mikroporöse kohlenstoffhaltige Material kann eine ausgeprägte Kapillarstruktur, insbesondere eine Mikrokapillarstruktur, aufweisen. Das mikroporöse kohlenstoffhaltige Material im Sinne der Erfindung weist einen Gehalt an elementarem Kohlenstoff von mindestens 85 Gew. %, insbesondere von mindestens 90 Gew. % oder 95 Gew. %, bezogen auf das Gesamtgewicht des mikroporösen kohlenstoffhaltigen Materials, auf. Der Flüssigkeitsgehalt des mikroporösen kohlenstoffhaltigen Materials im Sinne der Erfindung beträgt typischerweise höchstens 14 Gew. %, insbesondere höchstens 8 Gew. % oder höchstens 5 Gew. %, bezogen auf das Gesamtgewicht des mikroporösen kohlenstoffhaltigen Materials.

Unter kohlenstoffhaltigem Material im Sinne der Erfindung wird jede Art von kohlenstoffhaltigem Material verstanden, das durch Pyrolyse erhältlich ist. Wenn hier von kohlenstoffhaltigem Material die Rede ist, so ist damit Kohle, insbesondere Holzkohle oder Pflanzenkohle, sogenannte Biochar, gemeint. Vorzugsweise handelt es sich bei dem kohlenstoffhaltigem Material um Biochar. Gemäß einer Ausführungsform ist Holzkohle als Bestandteil des kohlenstoffhaltigen Materials ausgeschlossen. Das in dem erfindungsgemäßen Verfahren eingesetzte Biochar wird im Wesentlichen durch Pyrolyse von lignocellulosehaltigem Material erhalten.

Dem Fachmann sind grundsätzlich verschiedene Techniken der Pyrolyse bekannt. Bei der Pyrolyse wird im Allgemeinen eine thermo-chemische Spaltung organischer Verbindungen vorgenommen, wobei Temperaturen von über 300 °C, insbesondere mit Spitzenwerten bis zu über 1000 °C, einen Bindungsbruch innerhalb großer Moleküle in kleinere bewirken. Als organische Verbindungen kommen kohlenstoffhaltige Materialien in Betracht, insbesondere lignocellolusehaltige Materialen, wie Pflanzen, holzige Pflanzen sowie deren einzelne Bestandteile oder Abfälle davon. Pflanzen oder holzige Pflanzen im Sinne der Erfindung sind nicht auf eine bestimmte Art festgelegt. Beispiele hierfür sind Bäume, Sträucher, Getreide, Holz, Laub, Grünschnitt, Getreide, Reis, Kokos, Zelluloseflocken hergestellt aus Altpapier, oder Holzspäne, Holzschliff, Getreidestroh, Getreidespelzen, Schilf, Hanf, Flachs, Nessel (Urtica sp.), Kapok (Ceiba sp.), Ramie (Boehmeria sp.), Jute (Corchorus sp.), Manilahanf (Musa textilis), oder Sisal (Agave sisalana), sowie deren einzelne Bestandteile, insbesondere Fasern, Wurzeln oder Abfälle davon. Gemäß einer bevorzugten Ausführungsform umfasst der Begriff lignocellulosehaltiges Material, wie hier verwendet, nicht das großstückige Baumholz, welches für die Holzkohleproduktion verwendet wird.

Unter Komprimieren im Sinne der Erfindung ist eine Verdichtung unter Druck, insbesondere Granulieren oder Pelletieren, des kohlenstoffhaltigen Materials gemeint. Dem Fachmann sind unterschiedliche Techniken des Granulierens bekannt. Ziel des Granulierens ist die Herstellung von Granulaten, in denen einer Entmischung der einzelnen Komponenten vorgebeugt, sowie die Rieselfähigkeit und somit die Dosiergenauigkeit des verarbeiteten Materials stark verbessert werden kann. Grundsätzlich kann zwischen Aufbaugranulation und Abbaugranulation sowie der Feuchtgranulation und der Trockengranulation unterschieden werden. Bei der Trockengranulation werden feinteilige Materialien, Pulver oder deren Mischungen nur durch Krafteinwirkung oder durch Wärmeeinwirkung granuliert. Bei der Trockengranulation mithilfe von Druck handelt es sich um Pressagglomeration. Hierbei werden die zu verarbeitenden Materialien lediglich durch Stempel, Walzen oder Kollerrollen durch definierte Öffnungen gepresst. Durch den hohen Druck bewirken die starken mechanischen Kräfte die Bindung zwischen den Partikeln. Bei dem erfindungsgemäßen Verfahren können Drücke von 1 bis 120 bar, insbesondere von 60 bis 100 bar, verwendet werden. Vorzugsweise erfolgt das Komprimieren in Schritt b) des erfindungsgemäßen Verfahrens als Trockengranulation.

Kompaktierungswerkzeuge, die bei der Granulation verwendet werden können sind beispielsweise Walzenkompaktoren. Bei diesen wird durch einen definierten, engen Spalt zwischen zwei rotierenden Walzen das Pulver oder Material dosiert und allein durch Druck zu länglichen Strängen, den so genannten Schülpen, verdichtet. Aus diesen können anschließend Pellets gewonnen werden.

Pellets stellen eine besondere galenische Form von Granulaten dar. Bei ihrer Herstellung wird das zu verarbeitende Material zerkleinert und durch eine Matrize gepresst. Durch diesen Pressvorgang wird das Material gleichmäßig und stark verdichtet und in Pelletform gepresst. Pellets können im Trockenverfahren, das bedeutet im Wesentlichen ohne Zugabe von Flüssigkeit, insbesondere Wasser oder Lösemittel, hergestellt werden. Für eine bessere Konsistenz können Bindemittel verwendet werden. Gemäß einer Ausführungsform der Erfindung liegt das in Schritt b) und/oder c) erhältliche Material in Pelletform vor.

Besonders gute Eigenschaften weist das durch Komprimieren erhaltene Material auf, wenn das Granulat oder die Pellets in Schritt b) im Flachmatritzenverfahren hergestellt werden. Beim Flachmatritzenverfahren wird das Material kontinuierlich in die Matrize zudosiert und bildet dort eine Materialschicht, die verdichtet wird. Die einzelnen in den Presskanal eingewalzten Materialpropfen verbinden sich zu einem Pressstrang, der auf der Matrizenunterseite austritt und mit verstellbaren Messern in die gewünschte Länge zerteilt und so das Pellet erhalten wird. Zwischen Matrize und Kollern befindet sich im kontinuierlichen Betrieb somit immer Material. Dies ermöglicht eine bessere Vorverdichtung und Materialbindung. Typische durch Komprimieren erhaltene Granulate oder Pellets im Sinne der Erfindung weisen eine mittlere Partikelgröße von 1 bis 18 mm, insbesondere von 6 bis 12 mm, auf.

Vorteilhaft bei der Pelletierung mit der Flachmatrizenpresse ist, dass in einem Schritt das Material in ein Pellet mit definierten Eigenschaften annähernd staubfrei überführt werden kann.

Zur Verbesserung der Eigenschaften des durch Schritt b) erhältlichen Granulats oder Pellets kann mindestens ein weiterer Bestandteil zugesetzt werden, insbesondere ein Binde-, Spreng-, Fließ-, Schmier-, Formtrenn- und Füllmittel. Als Bindemittel können Agar, Gelatine, Pektin, Lecithin, Stärke und/oder Getreide verwendet werden. Optimale Ergebnisse haben sich in der Praxis eingestellt, wenn Triticum vulgaris, ein Bestandteil oder verarbeiteter Bestandteile davon, eingesetzt wird. Geeignete Konzentrationsbereiche für die im erfindungsgemäßen Verfahren eingesetzten Bindemittel sind Konzentrationen bis etwa 10 Gew. %, bezogen auf das

Schritte b) und c), d.h. Komprimieren und Zerkleinern, können gleichzeitig bzw. in einem Verfahrensschritt durchgeführt werden. Bevorzugt erfolgen die Schritte b) und c) jedoch getrennt voneinander. Erfindungsgemäß erfolgt Schritt b) in Form einer Pelletisierung und Schritt c) in Form einer Granulation.

Wenn hier im Zusammenhang mit Schritt c) von Zerkleinern die Rede ist, so ist damit Granulation, insbesondere Abbaugranulation gemeint. In einer besonderen Ausführungsform kann das Granulieren in einer abbauenden Trockengranulation, insbesondere durch Schneiden, Schreddern oder Walzen erfolgen. Dem Fachmann sind unterschiedliche Methoden hierzu bekannt. Vorzugsweise erfolgt das Zerkleinern in Schritt c) durch eine Walze, insbesondere eine Walze, die gerippte Rollen aufweist.

Das erfindungsgemäße Verfahren umfasst als weiteren Schritt d) das Fraktionieren des in Schritt c) erhaltenen Granulats in definierte Partikelgrößenbereiche. Das Fraktionieren erfolgt vorzugsweise durch Trockensiebung.

Je nach Anwendung haben sich bestimmte Partikelgrößenbereiche für die erfindungsgemäßen Granulate als besonders praxisgerecht erwiesen. Typische Partikelgrößenbereiche für erfindungsgemäße Granulate sind, jeweils ausgedrückt als mittlere Partikelgröße (Siebdurchmesser), von 0,3 bis 15 mm, besonders praxisgerecht von 0,5 bis 12 mm, insbesondere von 0,5 bis 2 mm, 2 bis 6 mm oder 6 bis 12 mm, ferner von 0,3 bis 6 mm, 0,5 bis 4,5 mm oder von 0,8 bis 2 mm. Gemäß einer besonders bevorzugten Ausführungsform werden diese Partikelgrößenbereiche durch das optional als Schritt d) erfindungsgemäß vorgesehene Fraktionieren eingestellt.

Bei den hier angegebenen "mittleren Partikelgrößen" handelt es sich um mittlere Siebdurchmesser, welche durch Siebanalyse gemäß DIN 66165 bestimmt werden. Zur Analyse des mittleren Siebdurchmessers kann z.B. ein Siebsystem mit von oben nach unten kleiner werdenden Maschenweiten gewählt werden. Beim Siebvorgang bleibt dann in jedem Sieb jener Anteil liegen, der durch das obere Sieb durchgegangen ist, jedoch durch das betrachtete Sieb nicht mehr durchgekommen ist. Die einzelnen Anteile können gewogen und in Form einer Kornverteilung prozentual dargestellt werden. Hieraus lasst sich auch der mittlere Siebdurchmesser nach DIN 66165 berechnen. Besonders bevorzugt weisen die erfindungsgemäßen Granulate eine Partikelgrößenverteilung auf, wobei 80 Gew.-%, vorzugsweise 90 Gew.-% oder 95 Gew.-% des Granulats in folgende Partikelgrößenbereiche (Siebdurchmesser) fallen: von 0,5 bis 12 mm, insbesondere von 0,5 bis 2 mm, 2 bis 6 mm oder 6 bis 12 mm, ferner von 0,3 bis 6 mm, 0,5 bis 4,5 mm oder von 0,8 bis 2 mm.

In der Praxis hat es sich als besonders zweckmäßig erwiesen, wenn das Komprimieren und/oder Zerkleinern im Trockenverfahren, das bedeutet im Wesentlichen ohne Zugabe von Flüssigkeit wie Wasser und/oder Lösemittel, durchgeführt wird.

Das erfindungsgemäß erhältliche mikroporöse Material ist in Granulat-Form. Dies hat den Vorteil, dass eine homogene Korngrößenverteilung erreicht und Stäube vermieden werden können. Granulate erlauben eine bessere Dosierbarkeit sowie Rieselfähigkeit. Dies kann vor allem von Bedeutung sein, wenn das durch das Verfahren erhaltene mikroporöse Material industriell, beispielsweise in der Landwirtschaft, Bau- und Wärmedämmstoff-, Futtermittel-, Lebensmittel- oder Pharmaindustrie, genutzt werden soll, insbesondere in Dosierungsvorrichtungen oder Vorrichtungen zur Verteilung des mikroporösen kohlenstoffhaltigen Materials.

Eine bevorzugte Ausführungsform der Erfindung sieht vor, dass das in Schritt a) erhältliche kohlenstoffhaltige Material in Schritt b) zu Pellets und in Schritt c) zu einem kleinstückigerem Granulat verarbeitet wird. Versuche haben gezeigt, dass sich durch die Zerkleinerung der Pellets eine besonders ausgeprägte Mikrokapillarstruktur ausbildet. Hierin ist eine überraschende Eigenschaft des in dem erfindungsgemäßen Verfahren erhältlichen mikroporösen kohlenstoffhaltigen Materials zu sehen, da sich - vermutlich durch die weitere energetische Einwirkung - das heterogene Kapillarsystem, bestehend aus Makro- und Mikrokapillaren, in ein homogenes und ausgeprägtes Mikrokapillarsystem überführen lässt. Wie oben erläutert, ist dies vorteilhaft, da sich überraschenderweise herausgestellt hat, dass gerade das Mikrokapillarsystem für die besonderen Ad- und Absorptionseigenschaften des erfindungsgemäßen Materials wichtig ist.

Das durch das erfindungsgemäße Verfahren erhältliche mikroporöse kohlenstoffhaltige Material eignet sich für viele Anwendungszwecke und ist besonders geeignet als Träger für Füllsubstanzen, wie insbesondere Mikroorganismen, Düngemittel, Mineralstoffe, Biozide und/oder Nahrungsergänzungsmittel. Für letztere Anwendung muss das Trägermaterial, insbesondere die Poren oder Mikrokapillarstruktur, mit der Substanz befüllt werden. Wenn hier von Poren die Rede ist, ist damit die Kapillarstruktur, insbesondere die Mikrokapillarstruktur, gemeint.

Gemäß einer weiteren Ausführungsform umfasst das erfindungsgemäße Verfahren als weiteren Schritt e) das Befüllen des Materials mit einer oder mehreren der beschriebenen Füllsubstanzen. Dabei kann das Befüllen vor, während oder nach Schritt b), c) und/oder d) erfolgen.

"Befüllen" im Sinne der Erfindung bedeutet aufladen oder biologisch aktivieren. Wenn hier von befülltem mikroporösem Material die Rede ist, wird darunter verstanden, dass das mikroporöse Material vollständig oder teilweise mit Füllsubstanzen wie beispielsweise Mikroorganismen, Düngemitteln, Mineralstoffen, Bioziden und/oder Nahrungsergänzungsmitteln befüllt ist. Im erfindungsgemäßen Verfahren kann das Befüllen vor, während oder nach Schritt b), c) und/oder d) erfolgen. Dabei kann das Befüllen durch Aufpudern, Coating, Sprühen oder Tauchen erfolgen. Die nach dem Befüllen aufgenommene Menge an Füllsubstanz kann das bis zu Dreifache, insbesondere das bis zu Sechsfache, bezogen auf das Gesamtgewicht des mikroporösen kohlenstoffhaltigen Materials, betragen. Eine bevorzugte Ausführungsform der Erfindung bei der Befüllung mit Mikroorganismen sieht vor, dass beim Befüllen keine weiteren Einwirkung, wie beispielsweise durch erhöhte Temperatur, erfolgen soll, da eine derartige Einwirkung die Funktionsweise der Mikroorganismen beeinträchtigen kann. Ähnliches gilt für die Befüllung mit hitzeempfindlichen Substanzen, wie beispielsweise Vitaminen.

Als Mikroorganismen können grundsätzlich Pilze (Fungi), Mykorrhizen, Sporen, Bakterien, Wurzelmikroben und/oder effektive Mikroorganismen (EM) eingesetzt werden. Bakterien im Sinne der Erfindung können aerobe Bakterien, anaerobe Bakterien, Rhizobien, nitrifizierende Bakterien und/oder stickstoffbindende Bakterien sein.

Zu den nitrifizierenden Bakterien im Sinne der Erfindung zählen die Proteobacteria und Nitrospira. Als besonders geeignete Vertreter der stickstoffbindenden Bakterien im Sinne der Erfindung kommen Proteobacteria, Azotobacter, Azomonas und Cyanobakterien sowie symbiotisch lebende Knöllchenbakterien (Rhizobien), wie beispielsweise Leguminosen und Frankia, in Betracht. Es können auch kommerzielle Produkte, insbesondere Twin N®, zur Stickstoffbindung verwendet werden.

Unter effektiven Mikroorganismen (EM) im Sinne der Erfindung werden Mischungen aus verschiedenen anaeroben nützlichen Mikroorganismen bezeichnet, die einen günstigen Einfluss auf die Vergärung von organischen Abfällen haben, indem sie unter anderem die Entstehung von Faulgasen und unerwünschten Schimmelpilzen unterdrücken. Produkte, die unter der Bezeichnung EM erhältlich sind, umfassen sowohl die Mikrobenmischungen selbst, als auch damit hergestellte Fertigprodukte, wie beispielsweise die Mikroben-Urlösung EM-1®, die unter diesem geschützten Namen von der EM Research Organization Inc. Japan erhältlich ist.

Zur erfindungsgemäßen Befüllung mit Düngemitteln eignen sich organische, mineralische sowie organomineralische Düngemittel. Im Sinne der Erfindung kann als Mineralstoff mindestens ein Mineralstoff, ausgewählt aus der Gruppe, bestehend aus Kalium, Calcium, Eisen, Magnesium, Phosphor, Schwefel, Bor, Mangan, Molybdän, Kobalt, Kupfer, Silizium, organisches Germanium und Uronsäuren oder Mischungen hiervon, verwendet werden.

Nahrungsergänzungsmittel im Sinne der Erfindung sind Produkte zur Versorgung des menschlichen und/oder tierischen Stoffwechsels mit bestimmten Nähr- oder Wirkstoffen. Wenn hier von Nahrungsergänzungsmittel die Rede ist, so sind damit insbesondere Futterergänzungsmittel, d.h. Tiernahrungszusätze, gemeint. Als Nahrungsergänzungsmittel kommt jede zur Nahrungsergänzung geeignete Substanz in Betracht, beispielsweise Vitamine, Aminosäuren, Spurenelemente und Mineralien. Beispiele hierfür sind, insbesondere Methionin, Hydroxymethionin, Lysin, Threonin, Mononatriumglutamat und/oder Tryptophan.

Füllsubstanzen im Sinne der Erfindung können ferner auch natürliche Essenzen und/oder medizinische Wirkstoffe enthalten oder hieraus bestehen. Natürliche Essenzen können beispielsweise ausgewählt sein aus Lavendel- Kamille-, Rosmarin-, Bachblütenessenz und Mischungen hiervon. Als Wirkstoffe kommen beispielsweise Tranquilizer oder verdauungsfördernde Substanzen in Frage.

Wenn hier von verzögerter Freisetzung die Rede ist, ist damit eine retardierte Freisetzung gemeint. Retard bezeichnet eine galenische Formulierung bei der die Substanz verlangsamt freigesetzt wird. Dem Fachmann sind grundsätzlich verschiedene Arten der Retardierung bekannt, insbesondere in Form eines Controlled-Release-Effekts, Continuous-Release-Effekts, Sustained-Release-Effekts, Delayed-Release-Effekts, Slow-Release-Effekts und/oder Prolonged-Release-Effekts. Das durch das erfindungsgemäße Verfahren erhältliche mikroporöse Material ist aufgrund der Mikrokapillarstruktur in der Lage die Substanz zu ad- oder absorbieren und verzögert freizusetzen. In einer besonderen Ausgestaltungsform der Erfindung, kann das mikroporöse kohlenstoffhaltige Material auch in einer Zubereitung mit Retard-Effekt vorliegen oder derart modifiziert werden, dass ein bestimmter Retard-Effekt erzielt werden kann oder der dem Material schon immanente Retard-Effekt verstärkt wird. Dem Fachmann sind eine Reihe von Möglichkeiten zur Herstellung von Zubereitungen mit Retard-Effekt bekannt. Beispiele für retardierte Formulierungen sind spezielle Überzüge oder Retard-Kapseln, die das mikroporöse kohlenstoffhaltige Material enthalten, welches nach dem Auflösen der Kapselhülle freigesetzt wird.

In einer besonderen Ausführungsform kann das verzögert freisetzende mikroporöse kohlenstoffhaltige Material mit einer schnellwirkenden und/oder schnellfreisetzbaren Anfangsdosis des kohlenstoffhaltigen Materials kombiniert werden.

Da die Mikrokapillarstruktur die verzögerte Freisetzung einer im mikroporösen kohlenstoffhaltigen Material enthaltenden Füllsubstanz ermöglicht, eignet sich das erfindungsgemäß erhältliche Material besonders gut als Bodenverbesserungsmittel, Nahrungsergänzungsmittel, Futterzusatz in der Tierhaltung oder Bestandteil davon.

Wie oben bereits erläutert, ist ein weiterer Effekt der ausgeprägten Mikrokapillarstruktur und vergrößerten Oberfläche die hervorragenden ad- und absorbierenden Eigenschaften. Dadurch kann das durch das erfindungsgemäße Verfahren erhaltene Material als Trägermaterial, insbesondere als Absorptionsmittel oder Bestandteil davon, eingesetzt werden. Unter Absorptionsmittel im Sinne dieser Erfindung ist ein Material gemeint, dass durch Ad- oder Absorption Flüssigkeiten teilweise oder gänzlich aufnehmen oder aufsaugen kann. Beispiele für derartige Flüssigkeit sind Wasser, Lösemittel, Alkohole, Fette, Öle, Mineralöl, Teerbestandteile und Kohlenwasserstoffe.

Die Erfindung betrifft daher ebenfalls eine Verwendung des erfindungsgemäßen mikroporösen kohlenstoffhaltigen Materials als Absorptionsmittel, insbesondere zur Reinigung von Abwässern oder als Feuchtigkeitsabsorber.

Wegen seinen hervorragenden Isolationseigenschaften und Eignung als Feuchtigkeitspuffer kann das erfindungsgemäße mikroporöse kohlenstoffhaltige Material auch als Baumaterial eingesetzt werden, insbesondere zur Wärmedämmung. Das erfindungsgemäße mikroporöse kohlenstoffhaltige Material kann dabei z.B. als Putzbestandteil auf Innen- und Außenwände aufbracht werden, in Ziegel eingearbeitet werden und/oder als Wärmedämmstoff oder Bestandteil hiervon verwendet werden.

Das Prinzip der Erfindung soll im Folgenden anhand von Beispielen näher erläutert werden.

### Beispiel 1

Zur Gewinnung des kohlenstoffhaltigen Materials in Form von Biochar wurden zunächst Holzchips und Pflanzenabfälle einer Pyrolyse bei einem Spitzenwert von ca. 1300 °C unterzogen. Danach wurde das durch pyrolytische Zersetzung erhaltene feinteilige Rohmaterial einer Vorrichtung mit Flachmatrizenpresse zugeführt. Dort wurde es von oben in den Prozessraum, bestehend aus Kollerkopf, Koller und Matrize, kontinuierlich zudosiert und bildete auf der Matrize eine Materialschicht. Der Kollerkopf wurde mit einstellbarem Anpressdruck mechanisch so fixiert, dass die Koller die Schicht überrollten und verdichteten. Die einzelnen in den Presskanal eingewalzten Materialpfropfen verbanden sich zu einem Pressstrang, der auf der Matrizenunterseite austrat und mit Messern in die gewünschte Zylinderlängen zerteilt wurde. So wurden Pellets mit einem Durchmesser von 6 mm und einer Länge von etwa 4 cm erhalten. Zwischen Matrize und Kollern befand sich dabei im kontinuierlichen Betrieb so gut wie immer Material. Dies ermöglichte eine bessere Vorverdichtung und Materialbindung. Die so erhaltenen Pellets wurden anschließend zur mechanischen Zerkleinerung ("crashen") in eine Walze überführt, die gerippte Rollen aufwies. Dabei wurde der Rollenabstand so eingestellt, dass ein mikroporöses kohlenstoffhaltiges Granulat mit einem Siebdurchmesser kleiner 12 mm Siebdurchmesser erhalten wurde.

### Beispiel 2

Das in Beispiel 1 hergestellte Granulat wurde fraktionsgemäß abgesiebt, um Granulate mit drei definierten Partikelgrößenbereichen zu erhalten. Die unterschiedlichen Siebe wurden so gewählt, dass drei Fraktionen von mikroporösem kohlenstoffhaltigen Granulat mit folgenden Partikelgrößen (Siebdurchmessern) erhalten wurden: 0,5 bis 2 mm (Fraktion 1), 2 bis 6 mm (Fraktion 2) und 6 bis 12 mm (Fraktion 3).

### Beispiel 3

Auf das in Beispiel 1 und 2 gewonnene Granulat wurde eine Lösung, die eine Mischung aus Mikroorganismen enthielt, aufgesprüht. Dadurch wurde ein befülltes mikroporöses kohlenstoffhaltiges Granulat erhalten.

Die Erfindung ist vorstehend anhand von Ausführungsformen und -beispielen exemplarisch beschrieben worden. Dabei versteht sich, dass die Erfindung nicht auf die beschriebenen Ausführungsformen und -beispiele beschränkt ist. Vielmehr ergeben sich für den Fachmann im Rahmen der Erfindung vielfältige Abwandlungsmöglichkeiten und Modifikationsmöglichkeiten und der Schutzumfang der Erfindung wird insbesondere durch die nachfolgenden Patentansprüche festgelegt.

## Patentansprüche

1. Verfahren zur Herstellung eines mikroporösen kohlenstoffhaltigen Materials, umfassend folgende Schritte:
a) Bereitstellen eines kohlenstoffhaltigen Materials, welches durch Pyrolyse von lignocellulosehaltigem Material erhältlich ist,
b) Pelletieren des kohlenstoffhaltigen Materials durch Einwirkung von Druck,
c) Granulieren des pelletierten kohlenstoffhaltigen Materials, und
d) Fraktionieren nach Partikelgröße,
wobei das Pelletieren des kohlenstoffhaltigen Materials in Schritt b) mittels Zerkleinern und Pressen durch einer Matrize erfolgt.

2. Verfahren nach Anspruch 1, **dadurch gekennzeichnet, dass** das lignocellulosehaltige Material Holz, Pflanzen, Gräser, Laub, Kokosfaser und/oder Getreide, enthält oder daraus besteht.

3. Verfahren nach einem der Ansprüche 1 oder 2, **dadurch gekennzeichnet, dass** das das kohlenstoffhaltige Material Holzkohle oder Biochar ist.

4. Verfahren nach einem der vorangegangenen Ansprüche, **dadurch gekennzeichnet, dass** Schritte a), b) und/oder c) im Trockenverfahren, insbesondere im Wesentlichen ohne Zugabe von Flüssigkeit wie Wasser und/oder Lösemittel, durchgeführt wird.

5. Verfahren nach einem der vorangegangenen Ansprüche, **dadurch gekennzeichnet, dass** das hergestellte mikroporöse kohlenstoffhaltige Material einen Flüssigkeitsgehalt von höchstens 14 Gew. %, insbesondere von höchstens 8 Gew. % oder von höchstens 5 Gew. %, bezogen auf das Gesamtgewicht des mikroporösen kohlenstoffhaltigen Materials, aufweist.

6. Verfahren nach einem der vorangegangenen Ansprüche, **dadurch gekennzeichnet, dass** das Pelletieren des kohlenstoffhaltigen Materials in Schritt b) bei einem Druck von 1 bis 120 bar, insbesondere von 60 bis 100 bar, erfolgt.

7. Verfahren nach einem der vorangegangenen Ansprüche, **dadurch gekennzeichnet, dass** das Pelletieren des kohlenstoffhaltigen Materials in Schritt b) im Flachmatritzenverfahren erfolgt.

8. Verfahren nach einem der vorangegangenen Ansprüche, **dadurch gekennzeichnet, dass** das in Schritt b) durch Druckeinwirkung pelletierte kohlenstoffhaltige Material eine mittlere Partikelgröße von 1 bis 18 mm, insbesondere von 6 bis 12 mm, aufweist.

9. Verfahren nach einem der vorangegangenen Ansprüche, **dadurch gekennzeichnet, dass** das in Schritt c) oder d) erhaltene Material eine mittlere Partikelgröße, bestimmt als mittlerer Siebdurchmesser, im Bereich von 3 bis 15 mm, 0,5 bis 12 mm, 0,5 bis 2 mm, 2 bis 6 mm, 6 bis 12 mm, 0,3 bis 6 mm, 0,5 bis 4,5 mm oder von 0,8 bis 2 mm aufweist.

10. Verfahren nach einem der vorangegangenen Ansprüche, **dadurch gekennzeichnet, dass** die Poren des mikroporösen kohlenstoffhaltigen Materials in einem zusätzlichen Schritt e) ganz oder teilweise mit einer Füllsubstanz, ausgewählt aus der Gruppe, bestehend aus Mikroorganismen, Düngemittel, Mineralstoff, Biozid, Nahrungsergänzungsmittel und Mischungen hiervon, befüllt werden.

11. Verfahren nach Anspruch 10, **dadurch gekennzeichnet, dass** das Befüllen der Poren des mikroporösen kohlenstoffhaltigen Materials durch Aufpudern, Coating, Sprühen und/oder Tauchen erfolgt.

12. Verfahren nach Anspruch 10 oder 11, **dadurch gekennzeichnet, dass** die Mikroorganismen ausgewählt sind aus der Gruppe, bestehend aus Fungi, Mykorrhizen, Sporen, Bakterien, effektiven Mikroorganismen (EM) und Mischungen hiervon.

13. Verfahren nach Anspruch 12, **dadurch gekennzeichnet, dass** die Bakterien ausgewählt sind aus der Gruppe, bestehend aus aeroben Bakterien, anaeroben Bakterien, Rhizobien, nitrifizierenden Bakterien, stickstoffbindenden Bakterien. und Mischungen hiervon.

14. Verfahren nach einem der Ansprüche 10 bis 13, **dadurch gekennzeichnet, dass** das Düngemittel ausgewählt ist aus der Gruppe, bestehend aus einem organischen, mineralischen, organomineralischen Düngemittel und Mischungen hiervon, und/oder der Mineralstoff ausgewählt ist aus der Gruppe, bestehend aus Kalium, Calcium, Eisen, Magnesium, Phosphor, Schwefel, Bor, Mangan, Molybdän, Kobalt, Kupfer, Silizium, organisches Germanium, Uronsäuren und Mischungen hiervon.

15. Verfahren nach einem der vorangegangenen Ansprüche, **dadurch gekennzeichnet, dass** dem kohlenstoffhaltigen Material vor oder während Schritt b) und/oder c) mindestens ein weiterer Bestandteil zugesetzt wird.

16. Verfahren nach Anspruch 15, **dadurch gekennzeichnet, dass** der weitere Bestandteil ausgewählt ist aus der Gruppe, bestehend aus einem Binde-, Spreng-, Fließ-, Schmier-, Formtrenn-, Füllmittel, Füllsubstanz und Mischungen hiervon.

17. Mikroporöses kohlenstoffhaltiges Material, erhältlich durch ein Verfahren gemäß einem der Ansprüche 11 bis 16, wobei das mikroporöse kohlenstoffhaltige Material eine Füllsubstanz, ausgewählt aus der Gruppe, bestehend aus einem Mikroorganismus, Düngemittel, Mineralstoff, Biozid, Nahrungsergänzungsmittel und Mischungen hiervon, enthält und wobei die Menge der Füllsubstanz das bis zu Dreifache, insbesondere das bis zu Sechsfache, bezogen auf das Gesamtgewicht des mikroporösen kohlenstoffhaltigen Materials beträgt und wobei das Material ein Granulat mit einem Partikelgrößenbereich, ausgedrückt als mittlere Partikelgröße, bestimmt als mittlerer Siebdurchmesser, von 0,5 bis 2 mm, 2 bis 6 mm oder 6 bis 12 mm ist.

18. Verwendung eines mikroporösen kohlenstoffhaltiges Materials nach Anspruch 17 als Bestandteil in bodenverbessernden Zubereitungen, Nahrungsergänzungsmitteln, Futterzusätzen in der Tierhaltung, als Baumaterial, Wärmedämmstoff und/oder als Absorptionsmittel.

19. Bodenverbesserungsmittel, Nahrungsergänzungsmittel, Futterzusatz, Baumaterial, Wärmedämmstoff oder Absorptionsmittel, enthaltend ein mikroporöses kohlenstoffhaltiges Material nach Anspruch 17.

## Claims

1. Method for producing a microporous material containing carbon, comprising the following steps:
a) providing a material containing carbon, which can be obtained by pyrolysis of material containing lignocellulose,
b) pelletising the material containing carbon due to the effect of pressure,
c) granulating the pelletised material containing carbon, and
d) fractionating according to particle size,
wherein the material containing carbon is pelletised in step b) by means of comminuting and pressing through a die.

2. Method according to Claim 1, **characterised in that** the material containing lignocellulose contains or consists of wood, plants, grasses, foliage, coconut fibres and/or grain.

3. Method according to either of Claims 1 or 2, **characterised in that** the material containing carbon is charcoal or biochar.

4. Method according to any one of the preceding claims, **characterised in that** steps a), b) and/or c) is carried out in a dry process, in particular substantially without the addition of liquid such as water and/or solvent.

5. Method according to any one of the preceding claims, **characterised in that** the produced microporous material containing carbon has a liquid content of at most 14% by weight, in particular at most 8% by weight or at most 5% by weight, based on the total weight of the microporous material containing carbon.

6. Method according to any one of the preceding claims, **characterised in that** the material containing carbon is pelletised in step b) at a pressure of 1 to 120 bar, in particular of 60 to 100 bar.

7. Method according to any one of the preceding claims, **characterised in that** the material containing carbon is pelletised in step b) in a flat die method.

8. Method according to any one of the preceding claims, **characterised in that** the material containing carbon pelletised in step b) due to the effect of pressure has a mean particle size of 1 to 18 mm, in particular of 6 to 12 mm.

9. Method according to any one of the preceding claims, **characterised in that** the material obtained in step c) or d) has a mean particle size, determined as the mean screen diameter, in a range of 3 to 15 mm, 0.5 to 12 mm, 0.5 to 2 mm, 2 to 6 mm, 6 to 12 mm, 0.3 to 6 mm, 0.5 to 4.5 mm or of 0.8 to 2 mm.

10. Method according to any one of the preceding claims, **characterised in that** the pores of the microporous material containing carbon are filled in an additional step e) wholly or partially with a filling substance, selected from the group consisting of microorganisms, fertilisers, mineral materials, biocide, food supplements and mixtures thereof.

11. Method according to Claim 10, **characterised in that** the pores of the microporous material containing carbon are filled by powdering, coating, spraying and/or dipping.

12. Method according to Claim 10 or 11, **characterised in that** the microorganisms are selected from the group consisting of fungi, mycorrhiza, spores, bacteria, effective microorganisms (EM) and mixtures thereof.

13. Method according to Claim 12, **characterised in that** the bacteria are selected from the group consisting of aerobic bacteria, anaerobic bacteria, rhizobia, nitrifying bacteria, nitrogen-binding bacteria and mixtures thereof.

14. Method according to any one of Claims 10 to 13, **characterised in that** the fertiliser is selected from the group consisting of an organic, mineral, organomineral fertiliser and mixtures thereof and/or the mineral material is selected from the group consisting of potassium, calcium, iron, magnesium phosphorus, sulphur, boron, manganese, molybdenum, cobalt, copper, silicon, organic germanium, uronic acid and mixtures thereof.

15. Method according to any one of the preceding claims, **characterised in that** at least one further constituent is added to the material containing carbon before or during step b) and/or c).

16. Method according to Claim 15, **characterised in that** the further constituent is selected from the group consisting of a binding agent, exploder, plasticiser, lubricant, mould release agent, filling agent, filling substance and mixtures thereof.

17. Microporous material containing carbon, obtainable by a method according to any one of Claims 11 to 16, wherein the microporous material consisting of carbon contains a filling substance selected from the group comprising a microorganism, fertiliser, mineral material, biocide, food supplement and mixtures thereof, and wherein the quantity of filling substance is that up to three times, in particular up to six times, based on the total weight of the microporous material containing carbon, and wherein the material is a granular material with a particle size range, expressed as the mean particle size, determined as the mean screen diameter, of 0.5 to 2 mm, 2 to 6 mm or 6 to 12 mm.

18. Use of a microporous material containing carbon according to Claim 17 as a constituent in soil-improving preparations, food supplements, feed additives in animal husbandry, as a building material, insulating material and/or as an absorbent.

19. Soil-improving agent, food supplement, feed additive, building material, insulating material or absorbent, containing a microporous material containing carbon according to Claim 17.

## Revendications

1. Procédé de préparation d'un matériau carboné microporeux, comportant les étapes suivantes :
a) préparation d'un matériau carboné, qui est obtenu par pyrolyse d'un matériau lignocellulosique,
b) agglomération en boulettes du matériau carboné par utilisation de pression,
c) granulation du matériau carboné en boulette, et
d) fractionnement selon la taille particulaire,
où l'agglomération en boulettes du matériau carboné à l'étape b) est réalisée par broyage et compression dans une matrice.

2. Procédé selon la revendication 1, **caractérisé en ce que** le matériau lignocellulosique contient ou consiste en du bois, des végétaux, des mauvaises herbes, des feuilles, des fibres de coco et/ou des céréales.

3. Procédé selon la revendication 1 ou 2, **caractérisé en ce que** le matériau carboné est du charbon de bois ou du biochar.

4. Procédé selon l'une quelconque des revendications précédentes, **caractérisé en ce que** les étapes a), b) et/ou c) sont réalisées dans le procédé à sec, en particulier essentiellement sans ajout de liquide comme de l'eau et/ou un solvant.

5. Procédé selon l'une quelconque des revendications précédentes, **caractérisé en ce que** le matériau carboné microporeux préparé présente une teneur en liquide d'au maximum 14% en poids, en particulier d'au maximum 8% en poids ou d'au maximum 5% en poids sur base du poids total du matériau carboné microporeux.

6. Procédé selon l'une quelconque des revendications précédentes, **caractérisé en ce que** l'agglomération en boulettes du matériau carboné à l'étape b) est réalisée sous une pression allant de 1 à 120 bar, en particulier de 60 à 100 bar.

7. Procédé selon l'une quelconque des revendications précédentes, **caractérisé en ce que** l'agglomération en boulettes du matériau carboné à l'étape b) est effectuée par le procédé à matrice plate.

8. Procédé selon l'une quelconque des revendications précédentes, **caractérisé en ce que** le matériau carboné aggloméré en boulettes sous pression à l'étape b) présente une taille moyenne des particules de 1 à 18 mm, en particulier de 6 à 12 mm.

9. Procédé selon l'une quelconque des revendications précédentes, **caractérisé en ce que** le matériau obtenu à l'étape c) ou d) présente une taille moyenne des particules, déterminée par le diamètre moyen de tamisage, située dans l'intervalle allant de 3 à 15 mm, de 0,5 à 12 mm, de 0,5 à 2 mm, de 2 à 6 mm, de 6 à 12 mm, de 0,3 à 6 mm, de 0,5 à 4,5 mm ou de 0,8 à 2 mm.

10. Procédé selon l'une quelconque des revendications précédentes, **caractérisé en ce que** les pores du matériau carboné microporeux sont remplis au cours d'une étape e) supplémentaire, totalement ou partiellement, d'une substance de remplissage choisie parmi le groupe consistant en des microorganismes, un engrais, une substance minérale, un biocide, un complément nutritionnel et leurs mélanges.

11. Procédé selon la revendication 10, **caractérisé en ce que** le remplissage des pores du matériau carboné microporeux est réalisé par saupoudrage, revêtement, pulvérisation et/ou immersion.

12. Procédé selon la revendication 10 ou 11, **caractérisé en ce que** les microorganismes sont choisis parmi le groupe consistant en des champignons, des mycorhizes, des spores, des bactéries, des microorganismes efficaces (ME) et mélanges de ceux-ci.

13. Procédé selon la revendication 12, **caractérisé en ce que** les bactéries sont choisies parmi le groupe consistant en les bactéries aérobies, les bactéries anaérobies, les rizhobiums, les bactéries nitrifiantes, les bactéries liant l'azote, et mélanges de ceux-ci.

14. Procédé selon l'une des revendications 10 à 13, **caractérisé en ce que** l'engrais est choisi parmi le groupe consistant en un engrais organique, minéral, organominéral et mélanges de ceux-ci, et/ou la substance minérale est choisie parmi le groupe consistant en le potassium, le calcium, le fer, le magnésium, le phosphore, le soufre, le bore, le manganèse, le molybdène, le cobalt, le cuivre, le silicium, le germanium organique, des acides uriques et mélanges de ceux-ci.

15. Procédé selon l'une quelconque des revendications précédentes, **caractérisé en ce qu'**au moins un autre constituant est ajouté au matériau carboné avant ou pendant l'étape b) et/ou c).

16. Procédé selon la revendication 15, **caractérisé en ce que** l'autre constituant est choisi parmi le groupe consistant en un liant, un explosif, un agent de fluidité, un lubrifiant, un agent de démoulage, une charge, une substance de remplissage et mélanges de ceux-ci.

17. Matériau carboné microporeux, obtenu par un procédé selon l'une des revendications 11 à 16, où le matériau carboné microporeux contient une substance de remplissage choisie parmi un microorganisme, un engrais, une substance minérale, un biocide, un complément nutritionnel et mélanges de ceux-ci, et où la quantité de substance de remplissage s'élève à 3 fois, en particulier à 6 fois sur base du poids total du matériau carboné microporeux et où le matériau est un granulé ayant une plage de taille particulaire, exprimée par la taille particulaire moyenne, déterminée par le diamètre moyen de tamisage, allant de 0,5 à 2 mm, de 2 à 6 mm ou de 6 à 12 mm.

18. Utilisation d'un matériau carboné microporeux selon la revendication 17 en tant que constituant de compositions d'amendement du sol, des compléments nutritionnels, des compléments alimentaires pour animaux, matériau de construction, isolant thermique et/ou agent d'absorption.

19. Agent d'amendement du sol, complément nutritionnel, complément alimentaire, matériau de construction, isolant thermique ou agent d'absorption contenant un matériau carboné microporeux selon la revendication 17.
